# EUROPEAN PATENT APPLICATION

(11) **EP 1 544 048 A1**
(43) Date of publication of application: **22.06.2005**
(21) Application number: 03104744.2
(22) Date of filing: 17.12.2003
(51) Int. Cl.: B60R 21/01

(54) **Device for the classification of seat occupancy**

(71) Applicant: IEE INTERNATIONAL ELECTRONICS & ENGINEERING S.A., 6468 Echternach (LU)
(72) Inventor: Decoster, Yves, B-6760 Ethe (BE)
(74) Representative: Beissel, Jean

(57) **Abstract**

A seat occupancy sensor (12) comprises a sensing layer (14) associated to a seating surface of a seat, which has at least one electrical property varying locally in response to a pressure and/or deformation applied to said sensing layer (14). The device further comprises a plurality of electrodes (18) associated to said sensing layer (14) at a periphery of a sensing area, and a control unit (20) connected to said electrodes (18), said control unit (20) comprising means for evaluating a pressure profile acting on said sensing layer (14) by determining said at least one electrical property between pairs of electrodes (18) selected from said plurality of electrodes.

The invention also relates to a method for the detection of seat occupancy comprising the steps of:
c) determining said at least one electrical property of said sensing layer (14) between pairs of different locations situated at a periphery of a sensing area, and
d) evaluating a pressure profile acting on said sensing layer (14) based on the determined electrical property values.

## Description

The present invention relates to a method and a device for the seat occupancy classification. The present invention more specifically relates to a device for the evaluation of a pressure profile acting on a surface of a vehicle seat, said pressure profile being suitable for being used in a classification algorithm.

In order to protect the lives of passengers during a traffic accident, modern vehicles are generally fitted provided with a protection system comprising several airbags and seat belt pretensioners, which are used to absorb the energy of a passenger released during the collision due to the accident. It is clear that such protection systems are most effective when they are well adapted to the specific requirements of an actual seat occupancy. That is why microprocessor-controlled protection systems have been designed which provide several operational modes, allowing for example an adaptation of the instant at which airbags are deployed, the volume to which the airbags are inflated, the instant at which safety belts are released after the collision, etc, as a function of the stature of a passenger on the seat. In order to enable the control microprocessor to select the optimum operational mode for a given seat occupancy status, it is of course necessary to detect one or several parameters characterizing the occupancy status of the seat and to classify the occupancy into one of several classes, each of which is associated to a specific operational mode of the restraint system.

One commonly known technology for the classification of the passenger seat occupancy is based on the recording of the pressure profile, which is exerted on the seat by the person or object occupying the seat. Such a pressure profile is usually recorded by a pressure sensing mat comprising an array of individual pressure sensors, which are associated at several locations to the seating surface of the vehicle seat. The pressure sensors comprise pressure sensitive resistors, i.e. the resistance of these pressure sensors changes with the pressure applied on the sensor. The reading of the resistance values of the individual pressure sensors thus gives an indication on the pressure acting on each cell and accordingly can be related to the weight acting on the seat. Furthermore the distribution of the pressure values over the surface of the seat can be related to the size or the form of a person or an object occupying the seat. Different methods in which a classification of a seat occupancy is based on several parameters extracted from the recorded pressure profile are e.g. disclosed in International applications WO-A-99/38731, WO-A-03/016100 and WO-A-03/023335.

A typical seat occupancy sensor, which may be used for detecting seat occupancy, is disclosed in document DE-A-42 37 072. This occupancy sensor, which is suitable for recording a pressure profile acting on a seating surface of a seat, comprises a plurality of individual pressure sensors, which are arranged in an array and associated at several locations to the seating surface of the vehicle seat. The individual pressure sensors are formed on two carrier foils and interconnected by strips made of these carrier foils. These strips of carrier foils also carry the conducting lines which are necessary to electrically interconnect the individual pressure sensors in a suitable configuration.

This configuration of the typical seat occupancy sensors leads to rather complicated designs of the sensor mat and the interconnecting strips as due to production requirements, a crossing of the electrical conducting lines should be prevented. It is clear, that the problem exponentially increases with a number of individual sensor cells of the sensing mat. Thus the number of individual pressure cells in a classical seat occupancy sensor is limited by the design constraints of the sensing mat.

It is clear, that the limitation of the number of individual sensors constitutes a limitation to the spatial resolution of the sensing which may reduce the field of application of these sensors. In fact, in order to be able to classify a passenger based on his pressure profile on the seat, it is preferably to record the pressure profiles with a high geometrical resolution. Only such a high geometrical resolution of the pressure profile ensures a high reliability of the pressure profile pattern analysis in order to isolate the correct characteristics of the passenger class.

For the occupant classification, it would thus be preferable to use seat occupancy detectors, having a higher spatial resolution than the classical seat occupancy sensing mat.

### Object of the invention

The object of the present invention is to provide an improved seat occupancy detector.

### General description of the invention

In order to overcome the abovementioned problem, the present invention proposes a device for the detection of seat occupancy, comprising a sensing layer associated to a seating surface of a seat, which has at least one electrical property varying locally in response to a pressure and/or deformation applied to said sensing layer. Further to said sensing layer, the device comprises a plurality of electrodes associated to said sensing layer at a periphery of a sensing area, and a control unit connected to said electrodes, said control unit comprising means for evaluating a pressure profile acting on said sensing layer by determining said at least one electrical property between pairs of electrodes selected from said plurality of electrodes.

In contrast to the known seat occupancy sensing mat, the device of the present invention is based on the determination of a locally changed electrical property of a sensing layer covering the sensing area of the device. This local change of electrical property is sensed between pairs of electrodes, which are connected to the sensing layer at a periphery of the sensing area. By measuring the electrical property between a plurality of pairs of electrodes, a two-dimensional profile of the electrical property can be recorded, which is correlated to the 2D pressure profile of a seat occupant in the seat. This pressure profile may subsequently be used in a classification algorithm in order to classify the occupancy in one on a plurality of classes having a specific airbag deployment mode associated therewith.

It will be noted that the spatial resolution or geometrical resolution of the present device is largely determined by the number of different measurements of the electrical property between pairs of electrodes and by the distance between adjacent pairs of electrodes, i.e. by the geometrical density of the electrodes at the periphery of the sensing area. It follows that in order to enable the pressure profiles to be recorded with high resolution, it is preferable to provide a high number of electrodes, which are advantageously arranged equally distant at the periphery of the sensing area.

It will be appreciated, that the electrodes of the present device for the detection of seat occupancy are associated to the sensing layer at a periphery of the sensing area. Thus these electrodes do not need to be arranged inside of the sensing area and accordingly no complicated design of conducting lines is required in order to contact the electrodes to the control unit. The maximum number of electrodes to be provided is therefore not limited by the design constraints, which are applicable for the classical pressure sensing mats.

The geometrical resolution of the detection device of the present invention can therefore easily be increased with respect to the classical detectors so that the seat occupancy detection device may be optimized for passenger classification. This results in a better image of the pressure profile and leads to a considerable improvement in the classification of the seat occupant.

It follows that the occupant detection device of the present invention enables to drastically increase the geometrical resolution of the pressure profile determination in the car seat. This increase of the geometrical resolution goes without a complicated sensor design. On the contrary, the sensor design work is even reduced due to the electrodes only being arranged at a periphery of the sensing area of the sensor. Furthermore, the simple design of the present detection device decreases the development time of the seat occupancy sensing device as integration problems, i.e. for the adaptation of the sensor design to a specific seat design, are considerably reduced.

It will be appreciated that the present invention also relates to a method for the detection of seat occupancy, said method employing a sensing layer associated to a seating surface of a seat, said sensing layer having at least one electrical property varying in response to a pressure and/or deformation applied to said sensing layer, said method comprising the steps of:
a) determining said at least one electrical property of said sensing layer between pairs of different locations situated at a periphery of a sensing area, and
b) evaluating a pressure profile acting on said sensing layer based on the determined electrical property values.

The evaluation of the pressure profile is preferably achieved based on a 2-dimensional profile of the electrical property of the sensing layer. This 2-dimensional electrical property profile is advantageously obtained by a tomography imaging method so that said control unit preferably comprises means for evaluating said pressure profile using a tomography imaging method.

The method comprises e.g. the application of an electrical voltage to a first electrode and subsequently the measurement of an electrical voltage or current at one ore more electrodes located generally opposite the first electrode. This operation is then successively repeated for a plurality of electrodes in order to obtain a measurement values for a plurality of regions of the sensing layer. These measurement values are then processed in order to plot an electrical property distribution within the sensing layer. This electrical property distribution is then correlated to the pressure profile acting on the sensing layer.

The electrical property under investigation should preferably vary uniformly with applied pressure and the relationship between the electrical property and the pressure is preferably described by a simple formula. In a preferred embodiment, the sensing layer is designed so that the electrical property is proportional to the pressure acting locally on the sensing layer.

The electrical property may e.g. comprise the electrical impedance of said sensing layer. If the control unit operates with DC voltages, the at least one electrical property comprises the electrical resistance or conductance of said sensing layer. Electrical Impedance Tomography EIT (where Impedance can be Resistance or Capacitance) or Electrical Resistance Tomography ERT are techniques based on the classical X-ray tomography currently used in medical imaging since 1971. The principle of this X-ray tomography may be extended on any simple physical parameter (impedance, dielectric constant, resistance, capacitance, optical parameters, flow viscosity, microwave attenuation, etc...) which is suitable for the 2D or 3D imaging. All of these methods belong to the family of non-intrusive tests.

Based on the ERT, any homogeneous electrical resistive layer able to change locally its resistance proportionally with the pressure/deformation can be used as a 2D pressure sensor. Similarly, EIT combined with any homogeneous electrical impedance layer able to change locally its impedance proportionally with the pressure/deformation also can be used as a 2D pressure sensor.

In a possible embodiment, the sensing layer may comprise a rubber material having an internal electrical impedance which varies in dependence with a deformation of the material. In a different embodiment, the sensing layer comprises a foam material having an internal electrical impedance which varies in dependence with a deformation of the material. This foam material may e.g. comprise the foam material of the seat cushion. In this case, the foam material of the seat cushion constitutes the sensi ng layer of the seat occupancy detection device.

In an alternative embodiment, the sensing layer comprises a first carrier foil having at least one surface covered with a resistance material and a second carrier foil having at least one surface comprising a plurality of areas covered with a conductive material. The first and second carrier foil are arranged at a certain distance from each other by means of a spacer material such that said areas covered with conductive material of said second carrier foil face said coating of resistance material of said first carrier foil.

The resistance material may be applied to, stuck to or deposited onto said first carrier foil. However in a preferred embodiment, the resistance material is printed onto said at least one surface of said first carrier foil. The conductive material may likewise be applied to, stuck to or deposited onto said second carrier foil. However in a preferred embodiment, the conductive material is printed onto said at least one surface of said second carrier foil.

The said spacer material advantageously comprises an adhesive, which is arranged in a plurality of localized areas between said first and second carrier foil. In a preferred embodiment, said spacer material comprises a printable adhesive which is printed in a plurality of localized areas onto one of said carrier foils.

It will be noted that the sensing layer may also comprise a combination of one or more of the different embodiments described above. It will further be noted, that the sensing layer of the present invention may be integrated into the seat foam, into the seat trim, between the seat foam and the seat trim, or even below the seat foam.

### Detailed description with respect to the figures

The present invention will be more apparent from the following description of several not limiting embodiments with reference to the attached drawings, wherein
- Fig.1:: shows schematically a top view of a vehicle seat with an embodiment of a device for the detection of seat occupancy;
- Fig.2:: illustrates the variation of an electrical property of the sensing layer as a function of applied pressure;
- Fig.3:: illustrates the measurement method for the evaluation of the pressure profile;
- Fig.4:: shows an embodiment of a sensing layer in a top view and a sectional view.

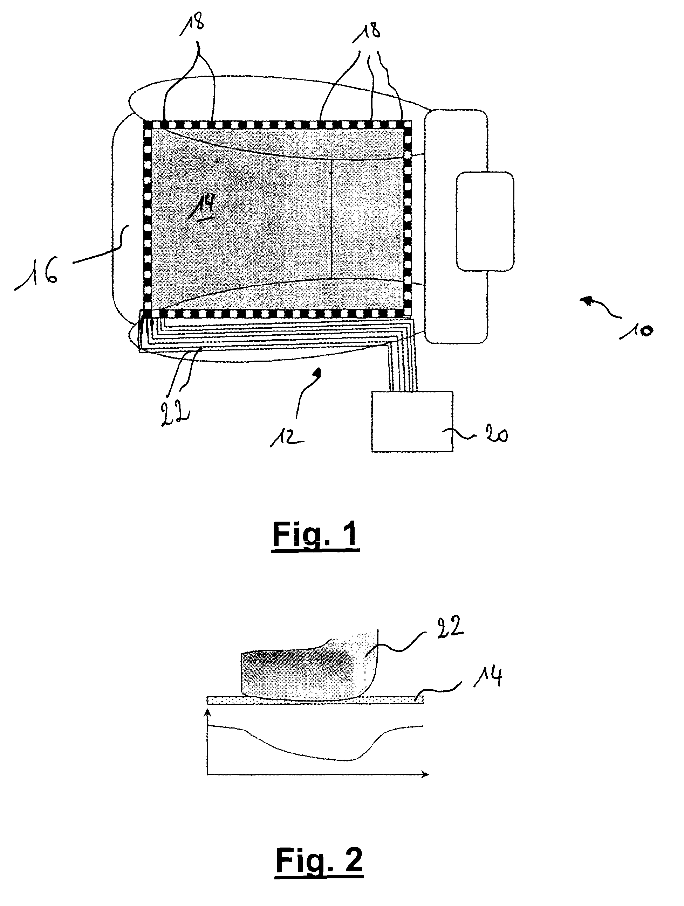

Fig. 1 schematically shows a top view of a vehicle seat 10 equipped with an embodiment of a seat occupancy detection device 12. The seat occupancy detection device 12 generally comprises a sensing layer 14 associated to s eating surface 16 of the seat. The homogeneous sensing layer 14 has at least one electrical property, e.g. the electrical resistance, which is depending on a compression of a deformation of the sensing layer 14.

At its border, which defines a periphery of the sensing area of the sensing layer, the sensing layer 14 is equipped with a plurality of electrodes 18. The electrodes 18 are arranged equally distant along the longitudinal border and along the transversal border of the sensing layer 14.

It will be noted, that in the shown embodiment, the electrodes 18 are distributed along the entire length of the respective borders. It will however be appreciated, that other embodiments, in which no electrodes are arranged in the corners of the sensing layer are possible. Furthermore it will be noted, that while the sensing layer shown in Fig. 1 has a rectangular shape, other shapes of the sensing layer are possible, such as oval or circular or any other form specifically adapted to a specific seating surface.

The different electrodes are connected, by means of electrical conductors 22, to a control unit 20 using a tomography method for the 2D pressure profile reconstruction. The electrical conductors 22 (Fig. 1 shows only a few of them for the sake of simplification of the drawing) do not extend across the sensing area of the sensing layer 14 but may simply be arranged at the periphery of the sensing layer 14 along the respective borders. This arrangement avoids a complicated design of conducting lines and thus reduces development time of the seat occupancy detection device 12.

The sensing layer 14 is preferably designed so that the electrical property under investigation, e.g. the electrical resistance, varies uniformly with applied pressure. This means that a locally lower electrical resistance in any region of the sensing layer is representative of a higher pressure acting on the sensing layer 14 in the respective region. Such a relationship between the electrical property and the pressure exerted by an occupant 22 on the sensing layer 14 is schematically illustrated in fig. 2, which shows in the lower part a graph of the electrical property corresponding to the seat occupancy situation shown in the upper part of fig. 2.

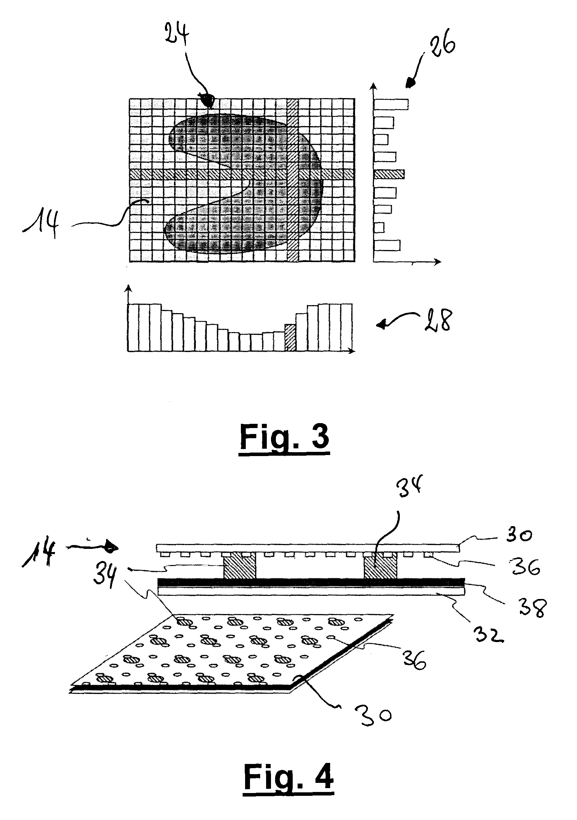

The sensing layer 14 can e.g. comprise a homogeneous rubber sheet, the electrical impedance of which varies with the pressure and/or deformation of the rubber sheet. These rubber materials are well known in the art and accordingly do not need to be described with more detail. Alternatively the sensing layer 14 can comprise a foil-type switching mat with a force sensing resistance as will be described later with respect to fig. 4.

The control unit comprises means for evaluating a pressure profile acting on the sensing layer 14 by determining e.g. the electrical resistance between several pairs of electrodes 18 selected from said plurality of electrodes 18. The evaluation of the pressure profile 24 is preferably achieved based on a 2-dimensional profile of the electrical property of the sensing layer 14. This 2-dimensional electrical property profile is advantageously obtained by a tomography imaging method illustrated in fig. 3.

The method comprises e.g. the application of an electrical voltage to a first electrode of a transverse border and subsequently the measurement of an electrical voltage or current at the longitudinally opposed electrode. This operation is then successively repeated all the electrodes along the transverse border in order to obtain measurement values 26 for a plurality of transversely adjacent regions of the sensing layer 14. Likewise the electrodes along a longitudinal border are successively driven and measurement values 28 are obtained for a plurality of longitudinally adjacent regions of the sensing layer 14

The measurement values 26 and 28 are then processed in order to plot an electrical property distribution within the sensing layer. This electrical property distribution is then correlated to the pressure profile acting on the sensing layer.

It will be noted, that although the shown method uses scanning in the transverse and the longitudinal directions of the sensing layer 14, other scanning directions are possible simply by selecting any other couple of electrodes around the pressure sensing layer.

As discussed above, the pressure sensing layer 14 comprises a material with an electrical characteristic (resistance or conductance) which changes locally with the applied local pressure coming from the occupant 22. An embodiment of a suitable multi-layer material is shown in fig. 4 (the upper part of fig. 4 shows a sectional view, the lower part shows the arrangement of several elements on one of the carrier foils).

This multi-layer material comprises a first carrier foil 30 and a second carrier foil 32 arranged at a certain distance from each other by means of a spacer material 34. The first carrier foil 30 comprises a plurality of areas covered with a conductive material 36 on its inner surface, i.e. the surface facing the second carrier foil 32. The conductive material may e.g. be printed in small, localized spots or islands onto the inner surface of the first carrier foil 30.

The inner surface of the second carrier foil 32, i.e. the surface facing the first carrier foil 30, is uniformly covered with a resistance material. The arrangement of the two carrier foils 30 and 32 is such that the areas covered with conductive material 36 of said first carrier foil 30 face said coating of resistance material 38 of said second carrier foil 32. In response to a pressure acting on the so-formed multi-layer material, the first and second carrier foil are pressed together in the region of the force acting on the sensing layer. If the pressure exceeds a specific pressure threshold, the conductive islands 36 are pressed into contact with the resistance material 38, such that the resistance across the resistance layer 38 decreases.

It will be noted that the surface density and the thickness of the spacer islands 34 determines partially the mechanical sensitivity of the pressure/sensing system. The difference of the electrical resistance between the conducting material and the resistance material determines partially the electrical resistance working range. Finally, the surface density of the conductive islands 36 determines the sensitivity of the pressure sensing system. The spatial resolution of the pressure sensing layer 14 is depending on both the surface density of the spacer island and the conductive island. Accordingly the characteristics of the sensing layer may be adjusted in a very large range by simply adjusting the respective parameters described above.

It will be noted that the spacer material advantageously comprises a printable adhesive, which is used to laminate the two carrier foils together. This printable adhesive is preferably printed together with the conductive islands onto the first carrier foil prior to the lamination of the carrier foils. The lower part of fig. 4 shows the distribution of the conductive islands and the spacer islands on foil 30 prior to the assembly of the two carrier foils.

### List of reference numerals

- 10: vehicle seat
- 12: seat occupancy detection device
- 14: sensing layer
- 16: eating surface
- 18: electrodes
- 20: control unit
- 22: electrical conductors
- 24: pressure profile
- 26: measurement values
- 28: measurement values
- 30: first carrier foil
- 32: second carrier foil
- 34: spacer material
- 36: conductive material
- 38: resistance material

## Claims

1. Device for the detection of seat occupancy, comprising
a sensing layer associated to a seating surface of a seat, said sensing layer having at least one electrical property varying in response to a pressure and/or deformation applied to said sensing layer,
a plurality of electrodes, said electrodes being associated to said sensing layer at a periphery of a sensing area, and
a control unit connected to said electrodes, said control unit comprising means for evaluating a pressure profile acting on said sensing layer by determining said at least one electrical property between pairs of electrodes selected from said plurality of electrodes.

2. Device according to claim 1, wherein said control unit comprises means for evaluating said pressure profile using a tomography imaging method.

3. Device according to any one of claims 1 to 2, wherein said at least one electrical property comprises the electrical impedance of said sensing layer.

4. Device according to any one of claims 1 to 3, wherein said at least one electrical property comprises the electrical resistance or conductance of said sensing layer.

5. Device according to any one of claims 1 to 4, wherein said sensing layer comprises a rubber material having an internal electrical impedance which varies in dependence with a deformation of the material.

6. Device according to any one of claims 1 to 5, wherein said sensing layer comprises a foam material having an internal electrical impedance which varies in dependence with a deformation of the material.

7. Device according to any one of claims 1 to 6, wherein said sensing layer comprises
a first carrier foil having at least one surface covered with a resistance material
a second carrier foil having at least one surface comprising a plurality of areas covered with a conductive material
said first and second carrier foil being arranged at a certain distance from each other by means of a spacer material such that said areas covered with conductive material of said second carrier foil face said coating of resistance material of said first carrier foil.

8. Device according to claim 7, wherein said resistance material is printed onto said at least one surface of said first carrier foil.

9. Device according to any one of claims 7 to 8, wherein said conductive material is printed in said areas onto said at least one surface of said second carrier foil.

10. Device according to any one of claims 7 to 9, wherein said spacer material comprises an adhesive, which is arranged in a plurality of localized areas between said first and second carrier foil.

11. Device according to any one of claims 7 to 10, wherein said spacer material comprises a printable adhesive, which is printed in a plurality of localized areas onto one of said carrier foils.

12. Method for the detection of seat occupancy, said method employing a sensing layer associated to a seating surface of a seat, said sensing layer having at least one electrical property varying in response to a pressure and/or deformation applied to said sensing layer, said method comprising the steps of:
a) determining said at least one electrical property of said sensing layer between pairs of different locations situated at a periphery of a sensing area, and
b) evaluating a pressure profile acting on said sensing layer based on the determined electrical property values.

13. Method according to claim 12, wherein said step of evaluating said pressure profile uses a tomography imaging method.
